# EUROPEAN PATENT SPECIFICATION

(11) **EP 1 559 530 B1**
(45) Date of publication and mention of the grant of the patent: **02.12.2009**
(21) Application number: 05250295.2
(22) Date of filing: 21.01.2005
(51) Int. Cl.: B29C 45/16, B29C 49/22, B65D 6/00, B65D 1/02

(54) **Preforms made of two or more materials and processes for obtaining them**
Vorformling aus zwei oder mehreren Materialien und Verfahren zu ihrer Herstellung
Préformes en deux ou plusieurs matériaux et procédé pour leur obtention

(30) Priority: 02.02.2004 EP 04250540; 06.10.2004 EP 04023789
(43) Date of publication of application: 03.08.2005
(73) Proprietor: THE PROCTER & GAMBLE COMPANY, Cincinnati, Ohio 45202 (US)
(72) Inventor: Hill, Simon David Julian, Surrey, KT14 6PH (GB)
(74) Representative: Marollé, Patrick Pierre Pascal

(56) References cited:
- DE-A1- 4 330 451
- US-A- 5 965 081
- US-A1- 2002 058 114
- PATENT ABSTRACTS OF JAPAN vol. 013, no. 028 (M-788), 23 January 1989 (1989-01-23) & JP 63 239011 A (DAINIPPON PRINTING CO LTD), 5 October 1988 (1988-10-05) -& DATABASE WPI Section Ch, Week 198846 Derwent Publications Ltd., London, GB; Class A32, AN 1988-325845 XP002329323 & JP 63 239011 A (DAINIPPON PRINTING CO LTD) 5 October 1988 (1988-10-05)
- PATENT ABSTRACTS OF JAPAN vol. 016, no. 235 (M-1257), 29 May 1992 (1992-05-29) -& JP 04 049010 A (DAINIPPON PRINTING CO LTD), 18 February 1992 (1992-02-18)
- PATENT ABSTRACTS OF JAPAN vol. 012, no. 356 (M-745), 26 September 1988 (1988-09-26) & JP 63 114604 A (DAINIPPON PRINTING CO LTD), 19 May 1988 (1988-05-19)
- THOMA H: "RATIONALISATION THROUGH MULTI-COMPONENT INJECTION MOULDING" INDUSTRIAL AND PRODUCTION ENGINEERING, CARL HANSER VERLAG. MUNCHEN, DE, no. 1, 1 March 1989 (1989-03-01), pages 76,79-82, XP000046432 ISSN: 0343-334X

## Description

### FIELD OF THE INVENTION

The present invention relates to an improvement in the injection blow-molding field, in particular to new preforms suitable for blow molding into bottles (and generally any hollow articles), to processes for the manufacture of these preforms and the articles obtained by blow-molding of these preforms. The processes of the invention employ two (or more) materials to form composite preforms. In a preferred embodiment, the two materials used have different colors and the resulting bottles show a multi-colored effect.

### BACKGROUND OF THE INVENTION

Injection blow-molding and its variant, injection stretch blow-molding, are commonly used to manufacture high quality hollow articles such as bottles on an industrial scale. In the first step of the process, a molten plastic material is injected into a mold cavity formed by an inner core rod and a preform mold to form a "test-tube" shaped intermediate, called a "preform". The preform mold is then opened and the molded preform subsequently blow-molded or stretch blow-molded.

In the injection blow-molding process, the core rod supporting the molded preform is immediately transferred to a bottle blow-mold having the shape of the desired hollow article. Air passing through a valve in the core rod inflates the hot preform, which expands and takes the form of the bottle blow-mold. After the desired bottle has sufficiently cooled to be handled, it is removed from the blow-mold and is ready for use (typically the part is allowed to cool for about 24 hours). More information on the injection blow-molding process can be obtained from general textbooks, for example "The Wiley Encyclopedia of Packaging Technology", Second Edition (1997), published by Wiley-Interscience Publication (in particular see page 87).

In the injection "stretch blow molding" process (sometimes known as biaxial-orientation blow-molding), the preform is carefully conditioned to a temperature warm enough to allow the preform to be inflated so that a biaxial molecular alignment in the sidewall of a blow-molded bottle is achieved. Relatively strong air pressure and, usually a stretch rod, are used to stretch the preform in the axial (vertical) direction. Unlike the bottles obtained by conventional injection blow-molding, the bottles obtained by stretch blow-molding are significantly longer than the preform. PET, PP and PEN (polyethylene naphtalate) are the choice material for the stretch blow-molding process. Different methods of injection stretch blow-molding exist, for example one step, two steps (also known as "reheat and blow"). More information on the injection stretch blow-molding processes can be obtained from general textbooks, for example "The Wiley Encyclopedia of Packaging Technology", Second Edition (1997), published by Wiley-Interscience Publication (in particular see pages 87 - 89).

Injection blow-molding is typically used to make relatively small shaped articles with precise neck finish and is commonly used to manufacture relatively high-value bottles for the cosmetic or pharmaceutical industry. Injection stretch blow-molding is typically used for the manufacture of larger articles such as drink containers for the soda industry, although this is not always true.

Unless otherwise explicitly stated, the term "injection blow-molding" is used hereinafter to designate both injection blow-molding and injection stretch blow-molding processes.

Extrusion blow-molding and injection blow-molding are different processes. In extrusion blow-molding, the molten plastic is extruded (typically continuously) to form an open-ended continuous tube. The extruded plastic is cut at regular intervals and the cuts are directly blow-molded to form an article. In the extrusion blow-molding process, the molten plastic material is not preformed around a core material to form a preform. The final shape of an article produced by extrusion blow-molding is less precise and less controllable than those obtained by injection blow-molding. Further details on extrusion blow-molding can be obtained in general packaging textbook, for example in "The Wiley Encyclopedia of Packaging Technology", referred to above, in particular pages 83-86. Extrusion blow-molding may be used to obtain laminated or co-extruded bottles with multiple layers for aesthetic or improved physical (barrier) properties.

Although conventional injection blow-molding provides good quality bottles with precise shapes, these bottles are usually made of a single material and only have one color (see for example US4,988,477 which discloses a method for producing an homogenously colored polyester container wherein a granular PET feed is mixed with a dyestuff composition).

US 5,965,081 discloses a method of injection molding a multi-layer preform from a combination of virgin and recycled plastic.

Further decoration of the bottles by labeling, etching or engraving is not always possible for bottles with complex shapes and can be costly. It has been attempted in WO97/21539 to improve the appearance of injection blow-molded bottles by using two differently colored materials to manufacture the bottles. In the process of WO97/21539, the differently colored materials are sequentially injected through a supply gate in a conventional injection mold cavity. According to WO97/21539, a layered distribution of the materials can be achieved by careful control of various operating parameters such as the quantity of materials injected, their rate of injections and the temperatures of injection. Controlling these parameters is however difficult and, as shown in Fig.8 of WO97/21539, the boundaries between the layers is imprecise and the process is not adapted to the manufacture of preforms having reproducible decorative features. Also this system only allows the formation of bottles with horizontal superposed layers of differently colored materials (taken the axis of the bottle as vertical axis).

US application number US2002/0058114A1 discloses a process for obtaining colored preforms with at least two colors. In this process, a base preform presenting a cylindrical recess is first formed by injecting a first material from an injection point at the bottom region of the base preform. The base preform is transferred to a second mold and the recess is filled by injecting a second material from an injection point, again at the bottom region of the base preform. The process can be repeated to obtain multi-colored preforms. The different colored materials are distributed as horizontally superposed layers, The process can be repeated to obtain multi-colored preforms. The different colored materials are distributed as horizontally superposed layers, when the central axis of the preform is taken as the vertical axis. The center axis of the nozzle for the first material and the center axis of the second material are coaxial in this document. It was found in the present invention that the center axis of the nozzles need not be coaxial, and that when non coaxial nozzles are used new preforms can be obtained.

EP1,180,424A1 discloses a process for producing bottles having a laminated peelable inner layer for specific applications such as the delivery of hair dyes.

It would be desirable to have a system permitting a more controlled distribution of the different materials in the preforms, for example to be able to obtain reproducible and recognizable designs or logos. At the same time, the bonding between the two materials must be sufficiently strong and not break when the preform is blow-molded.

### SUMMARY OF THE INVENTION

The present invention is directed to new preforms suitable for blow molding into bottles (and generally any hollow articles), to processes for the manufacture of these preforms and the articles (e.g. bottles) obtained by blow-molding of these preforms, all of which as defined in the claims. The preforms of the invention are made of at least a first material and a second material different from the first material.

The process for manufacturing the preform of the invention comprises the successive steps as defined in independent claim 1.

The present invention is also directed to a new preform in accordance with independent claim 2. Further embodiments of the preform according to the invention are defined in the dependent claims.

The preforms may then be blow-molded by conventional blow-molding or stretch blow-molding techniques.

These and other features, aspects, and advantages of the present invention will become evident to those skilled in the art from a reading of the present disclosure.

### BRIEF DESCRIPTION OF THE DRAWINGS

While the specification concludes with claims which particularly point out and distinctly claim the invention, it is believed the present invention will be better understood from the following description of the preferred embodiments taken in conjunction with the accompanying drawings, in which like reference numerals identify identical elements and in which:
Fig. 1 is a diagram showing a traditional preform with the three regions indicated (neck, lateral wall and bottom),
Fig. 2 is a schematic diagram illustrating an exemplary two injection steps process according to the present invention;
Fig. 3 is a schematic diagram illustrating the blow-molding (e.g. stretch blow-molding) of a preform obtainable by the process of Fig. 2 to make a bottle;
Fig. 4 is a schematic diagram of an exemplary four stage injection blow-molding process according to the present invention, wherein the injection and blow-molding stages are carried out on the same machine;
Fig. 5 is a schematic diagram of an alternative four stage injection blow-molding process further comprising a conditioning station followed by a stretch blow-molding station;
Figs. 6 to 11 each show two drawings: the drawing on the right hand side is an example of a preform made of two materials according to the invention; the corresponding drawing on the left hand side is an example of bottle obtainable by blow-molding the preform of the right hand side in a suitable mold.
Fig. 12 is a schematic cross-section diagram of a preform as shown on Fig. 6.
Fig. 13 is a schematic cross-section diagram of a preform as shown on Fig. 11.
Fig. 14 is a schematic cross-section of a first preform mold useful for making a preform as shown on Figs. 6 and 12 with the first material completely injected in the first mold cavity.
Fig. 15 is a schematic cross-section of a first preform mold useful for making a preform as shown on Figs.6 and 12 with the second material being completely injected in the second mold cavity.
Fig. 16 is a schematic cross-section of a first preform mold useful for making a preform as shown on Figs. 11 and 13 with the first material completely injected in the first mold cavity.
Fig. 17 is a schematic cross-section of a first preform mold useful for making a preform as shown on Figs. 11 and 13 with the second material being completely injected in the second mold cavity.

### DETAILED DESCRIPTION OF THE INVENTION

While the specification concludes with claims which particularly point out and distinctly claim the invention, it is believed the present invention will be better understood from the following description and examples, which further describe and demonstrate the preferred embodiments within the scope of the present invention. The examples are given solely for the purpose of illustration, and are not to be construed as limitations of the present invention since many variations thereof are possible without departing from its scope as defined in the appended claims.

Herein, "comprising" means that other steps and other ingredients can be added. This term encompasses the terms "consisting of" and "consisting essentially of".

The term "bottle" as used herein refers to any hollow article obtainable by blow-molding. The bottles of the present invention are preferably suitable for use as a container for any kind of matter, such as liquids, solids or semi-solids. The term bottle does not imply a particular intended use for the article. For example, the term "bottle" as used herein encompasses articles destined to contain cosmetic products (e.g. shampoos. creams, etc), edible products (e.g. milk, soft drink, condiments, etc), chemicals, etc...

The term "preform" as used herein refers to a "test-tube" shaped intermediate obtained by injection-molding of a plastic material between a core rod and a preform mold cavity and destined to be (stretch) blow-molded into a bottle. The neck of the preform remains substantially unchanged during the blow-molding process while the rest of the preform will expand considerably. Preforms are sometimes improperly called "parisons", although this term should be reserved to the extruded tubular intermediates formed during an extrusion process. The cross-section of the preform may be cylindrical or non-cylindrical, for example oval, rounded squares/rectangles, triangle, asymmetric, etc... depending on the desired final bottle shape.

The term "center axis of an injection nozzle" refers to axis running through the center of said injection nozzle.

The term "injection point" of a material refers to the area of the completed preform through which the material was injected from the nozzle into the mold. Usually, but not necessarily, the injection point is circular and is clearly recognizable in the completed preform and even the blow-molded article by the presence of a slight asperity, usually round in shape.

The term "neck region of the preform" as used herein refers to the upper part of the preform which is not stretched during the blowing process and to which the cap of the bottle will normally be attached. The neck region comprises the mouth of the preform.

The term "bottom region of the preform" as used herein refers to the part of the preform directly opposite the neck region and which has not a constant cross-section.

The term "lateral wall region of the preform" refers to the part of the preform between the neck region and the bottom region, which has a substantially constant cross-section.

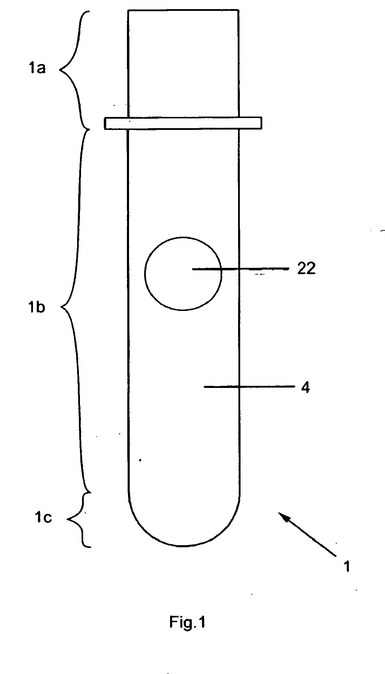

Fig. 1 illustrates a preform (1) made of a single material where the neck region (1a), the lateral wall region (1b) and the bottom region (1c) are indicated.

The terms "incomplete preform" as used herein designates a preform that is only partially formed and comprises at least one empty volume that may be subsequently filled by at least one other material before the preform is blown into a bottle. The empty volume may extend through the whole thickness of the preform wall (in this case it can be designated as a hole), but it is preferred that the volume does not extend through the whole thickness of the wall, and in this case it can be designated as a recess.

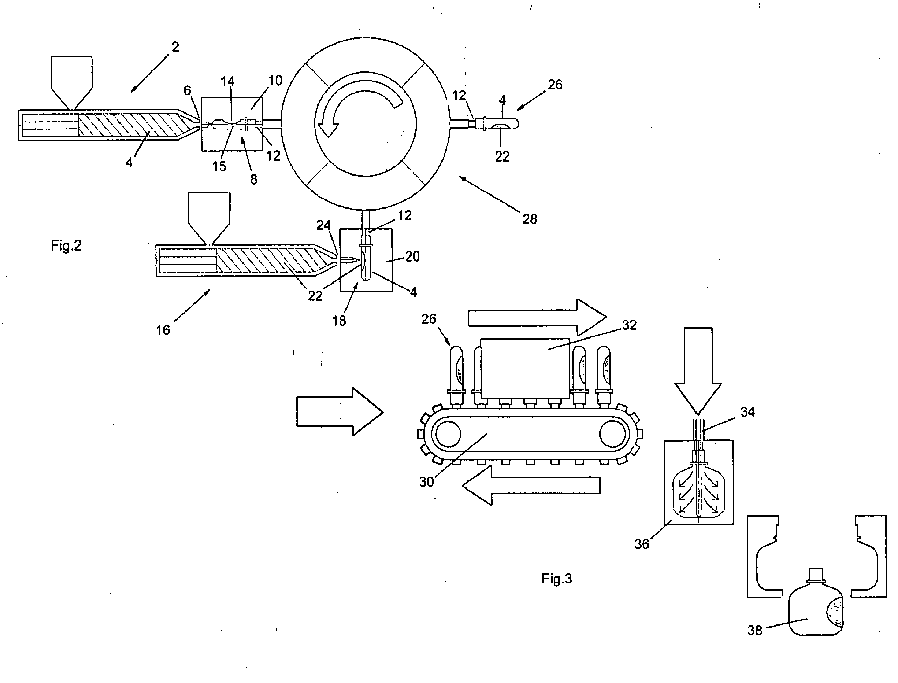

An embodiment of a process of the present invention will now be discussed with reference to Figs. 2 and 3. In this embodiment, the injections of the molten plastic materials to form the preform and the (stretch) blow-molding of the preform are carried out on separate machines.

In the first injection station (2), a first molten plastic material (4) is injected through an injection nozzle (6) in a first mold cavity (8). This mold cavity (8) is limited on the outside by a first preform mold (10) and on the inside by an inner cylindrical core rod (12) positioned centrally inside the preform mold. The first injection nozzle has a center axis (not represented in this figure for clarity of the sketches), which in this example is coaxial with the cylindrical core rod. This first mold cavity is adapted to leave at least one volume (14) in the resulting preform (15) empty after the first material has been completely injected. This preform, comprising at least one empty volume, is designated herein as an "incomplete" preform (15).

Different solutions may be used to obtain a first mold cavity adapted to leave at least one volume (14) in the resulting preform empty after the first material has been completely injected. For example, as illustrated in Fig. 2, the inside of the first preform mold may comprise one (or more) protruding volumes of mold material (which may be stainless steel) that will leave by in-print one (or more) corresponding empty volume in the resulting, incomplete preform (15). Once the first plastic material has sufficiently cooled and solidified, the first preform mold may then be opened. The core rod and the incomplete preform (15) sitting on it may be rotated to the second injection station (16).

The second injection station (16) may comprise a second preform cavity (18) formed by the space between an inner core rod (12) and a second preform mold (20), said second preform cavity being adapted to allow the injection-molding of the second molten material to fill-in said at least one empty volume (14). After closure of the second preform mold (20), the second material (22) is injected in a molten state through a different injection nozzle (24) having a second center axis into the empty volume(s) (14) to (at least partially) complete the incomplete preform (15). The center axis of the first injection nozzle and the center axis of the second injection nozzle are not coaxial.

Preferably, the respective temperatures of the first and second materials at the time of injection of the second material are conducive to effective bonding of the materials. This can be easily determined by simple iterative experimentation.

In another embodiment (not illustrated), the first and second injection steps may be performed in the same preform mold, said preform mold comprising moving elements shutting-off the one or more empty volume to be occupied by the second material during injection of the first molten material, said removable elements being then removed before step ii) so that said second molten material can be injected in the at least one empty volumes previously occupied by the removable elements. The first and second materials may then be injected through injection nozzles having different central axis. Usually different injection nozzles will be used, as otherwise the same nozzle must be able to move relative to the preform. It is also envisaged that the mold moving elements may be exchangeable, thus allowing various designs and shapes to be obtained with the same injection machine. It is also envisaged that non-moving, but exchangeable inserts may be used in the mold cavity of a machine to also increase the versatility of an injection machine. I

In the schematic diagram of Fig. 2, only one empty volume (14) is represented, but it is clear to the person skilled in the art that several empty volumes in the incomplete preform may be simultaneously filled in by the second material using an injection nozzle with multiple heads. Injection stations, optionally fitted with multi-headed injection nozzles, are commonly used in the injection-molding industry to form composite objects made of different plastic materials such as toothbrush handles or mobile phone bodies. These injection stations can be easily adapted for use in the present invention to serve as the first and/or second injection stations as described above.

The second material (22) is different from the first material (4). By different, we mean that the first material composition is not exactly the same as the second material composition. In particular, it is preferred that the first and second material have a different visual appearance. For example, the first and second materials may contain different pigments, or one material may be untinted whilst the other material comprises a pigment.

However, it is also preferred that the first material and the second material have similar physical properties so that the second material "welds" properly to the first material when injected and that the preform is not prone to cracks when subsequently blown. Thus, the first and second materials are preferably of the same plastic type. Non limiting examples of usual thermoplastic material that can be used as first and second materials are: polyethylene terephthalate (PET), polypropylene (PP), polyethylene naphthalate (PEN), glycol-modified polyethylene terephthalate - (PETG), polycyclohexylenedimethylene terephthalate (PCT), glycol-modified polycyclohexylenedimethylene terephthalate (PCTG), acid-modified polycyclohexylenedimethylene terephthalate (PCTA), bisphenol-A polycarbonate, blends of polyesters with bisphenol-A polycarbonate, polyester-based elastomers, polyethylene (including low-density polyethylene, medium-density polyethylene and high-density polyethylene), ethylene propylene, copolymer resin, ethylene vinyl acetate copolymer resin, other polyolefin resins, polyamide resins, ionomer resins, ABS resins, polyvinylchloride, other synthetic resins, and copolymers thereof.

Preferred materials are polyethylene terephthalate (PET), polypropylene (PP), polyethylene naphthalate (PEN), glycol-modified polyethylene terephtalate (PETG), polycyclohexylenedimethylene terephthalate (PCT), glycol-modified polycyclohexylenedimethylene terephthalate (PCTG), acid-modified polycyclohexylenedimethylene terephthalate (PCTA), bisphenol-A polycarbonate, blends of polyesters with bisphenol-A polycarbonate, polyester-based elastomers, low density polyethylene (LDPE), linear low density polyethylene (LLDPE), high density polyethylene (HDPE), and mixtures thereof.

Even more preferred polymers, particularly when the preform is stretch blow-molded, are polyethylene terephtalate (PET), polypropylene (PP), polyethylene naphthalate (PEN), glycol-modified polyethylene terephthalate (PETG), polycyclohexylenedimethylene terephthalate (PCT), glycol-modified polycyclohexylenedimethylene terephthalate (PCTG), acid-modified polycyclohexylenedimethylene terephthalate (PCTA), bisphenol-A polycarbonate, blends of polyesters with bisphenol-A polycarbonate, and mixtures thereof.

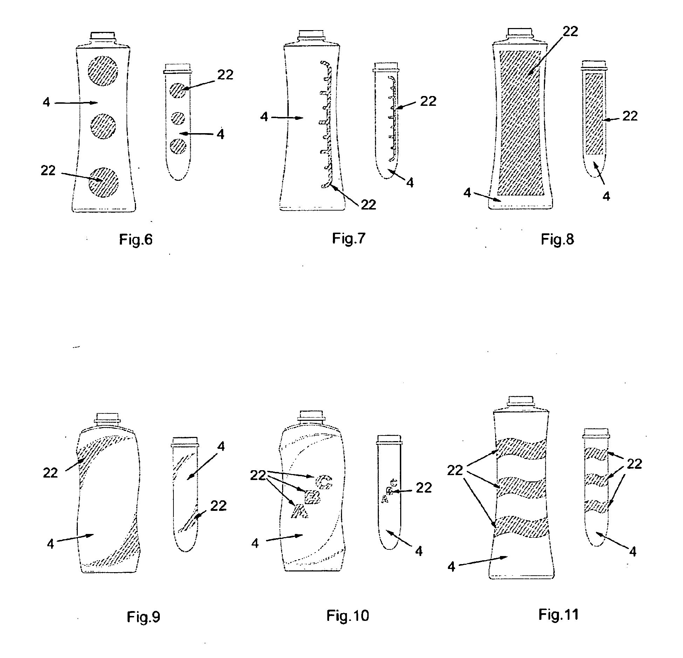

When different types of plastic material are used, these are preferably as compatible as possible. GB2,191,145, Fig. 7 provides a compatibility table for common plastic materials in an extrusion (not injection) context. However it is believed that this table may be useful to select materials in the present invention. PETG is found to provide excellent results in terms of strength of the welding line (the boundaries between the materials).

In order to obtain the best results, in particular the best possible bonding strength between the materials, it is preferable that the empty volume does not extend through the whole thickness of the preform, in other word that the empty volume forms a recess. Preferably this recess is at the external surface of the preform. Preferably the first material is injected in the bottom region of the preform to make an incomplete preform having a recess on the external surface of the lateral wall region of the preform, and the second material is injected somewhere in the lateral wall of the preform to fill said recess and complete the preform. The bottom region of the preform is then preferably entirely made of the first material.

The preform may be totally completed after injection of the second material, but it is also envisaged that the preform may only be partially completed after the injection of the second material, for example in embodiments wherein a third or more materials are further injected in the remaining empty volumes.

Back to the embodiment of Fig. 2, after the second material has been injected and the preform completed, the second preform mold (20) is opened and the core rod (12), on which the completed preform (26) sits, is rotated to a removing section (28) where the completed preform is safely removed from the core rod (12). The core rod may be rotated back to the first preform mold to start a new cycle.

The completed preform can now be (stretch) blow-molded to form a bottle. Naturally, the completed preforms can be (stretch) blow-molded in the same manufacturing site or can be stored and subsequently transported in bulk to a specialized blow-molding site. A standard stretch blow molding process for normal preform may be used. For example, as shown on Fig. 3, the completed preforms (26) may be placed on a preform conveyor (30) and reheated by a heating unit (32) to make them more stretchable, then placed on a conventional stretch rod (34) in a blow-mold cavity (36). The simultaneous actions of compressed air (or another gas) passed through valves in the stretch rod to inflate and of the stretch rod (34) itself stretch the preform body inside the preform mold. The blow-mold is then opened and the finished bottle (38) ejected. A standard non-stretch blow-molding process may also be used.

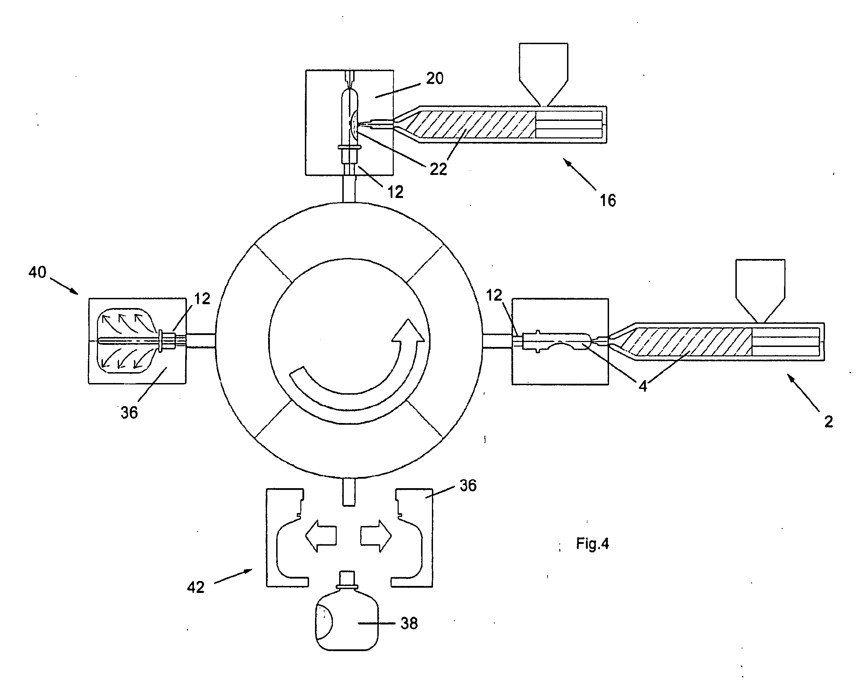

Fig. 4 illustrates a four stages process that is similar but more automatic than the process described in Figs. 2-3. In this process, the first injection and second injection stages may be carried out in a similar manner as discussed in Fig. 2 with similar injection stations (2, 16). The completed preform (26), whilst sitting on the core rod, may then be directly rotated to a blow-mold station (40) after the second injection station. Compressed air or another gas may then be passed through one or more valves in the core rod (12) to inflate the preform body so that it takes the shape of the blow mold (36). Alternatively, at this stage, the core rod (12) may also be retracted and a stretch rod adapted to stretch blow-molding inserted in the preform through its neck.

The blow-mold may then be opened and the finished bottle (38) ejected in an ejection station (42). The core rod may then be rotated back to the first injection station (2) and a new cycle can begin. Of course, the machine may comprise up to four core rods so that the injection steps, the blow step and the ejection step may take place simultaneously with different preforms/bottles.

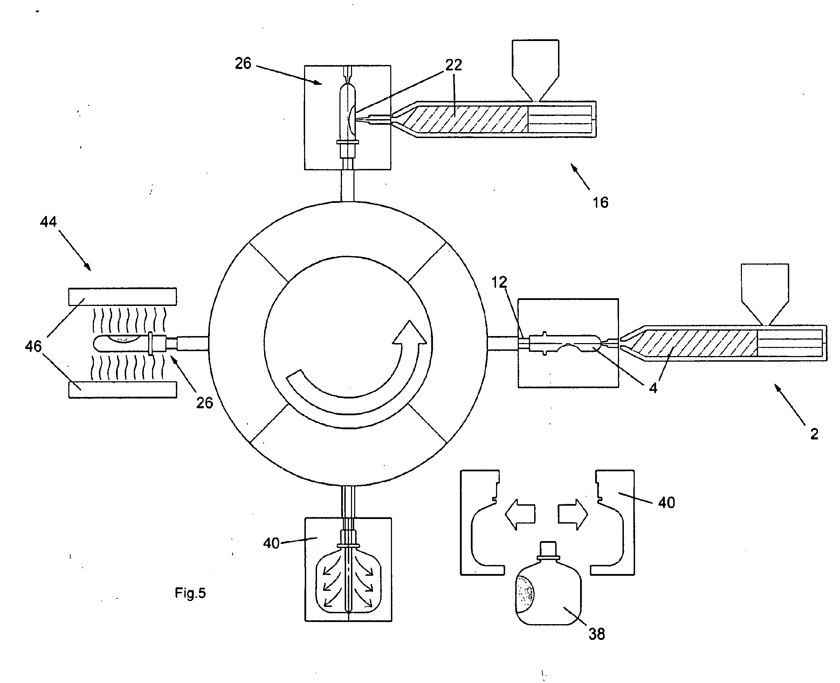

Fig. 5 is another example of a four stage process illustrating the present invention. In this process, the completed preform (26) obtained after the second injection station (16) is rotated to a conditioning station (44) comprising heaters (46) where the completed preform is re-heated prior to the blow-molding stage in a blow-molding and ejection station (48). The finished bottle (38) is finally ejected from the blow-mold (40).

The processes of Figs. 4 and 5 are advantageous because the preforms are immediately transformed into finished products. However the machines used for these processes are more complex than the machines that may be used for a 2-steps process such as illustrated in Figs. 2-3 where the injection and blow-molding stages are carried out on different machines.

Although the embodiments of the invention herein illustrated describe processes and preforms made of two materials, combinations of three or more materials are also envisaged within the scope of the present invention. For example a third or more injection stations may be added to the processes disclosed herein.

The distribution of the first and second materials in the completed preforms may be well controlled by the shape of the preform molds used, and the preforms obtained may be reproduced with great consistency. Furthermore, the boundaries between the first and second materials are precise. This result was not obtainable by the process disclosed in prior art document WO97/21539, and the preforms obtainable according to the processes claimed are believed to be new.

If the incomplete preform is returned to the first mold for further injection, this avoids the need for two injection molding stations. Injection the second material through a second nozzle may increase the cost of the machine but enables a larger choice of distribution of the first material into the second material, in particular to obtain inclusions on the side walls of the bottles such as shown on Figs. 6 to 11. Using a second mold for the injection of the second material is also possible.

According to the present invention, the first material and the second material may be distributed in various shapes and forms relative to each other, as illustrated on Figs. 6 to 11. For example, the shapes that the second material may take include squares, rectangles, rectangles with round corners, circles or ovals, letters, words, etc.

Fig. 6 shows an example of a bottle having multiple inclusions of the second material (22) in a continuous matrix made of a first material (4).

In Fig. 7, graduations are formed by the second material (22), facilitating a more exact reading of the proportion of content left in the bottle if the second material is transparent.

Fig. 8 shows a bottle with a broad colour panel that could be used to frame a label.

Fig. 9 shows a curved bottle wherein the second material is distributed in areas of the bottle where it would be difficult to apply a label using standard means.

Fig. 10 illustrates how the preform and bottle may show letters or logo.

Fig. 11 illustrates a preform where several rings of the second material are inserted in the external surface of the lateral wall of the preform. The rings illustrated are wavy, but they could also be straight.

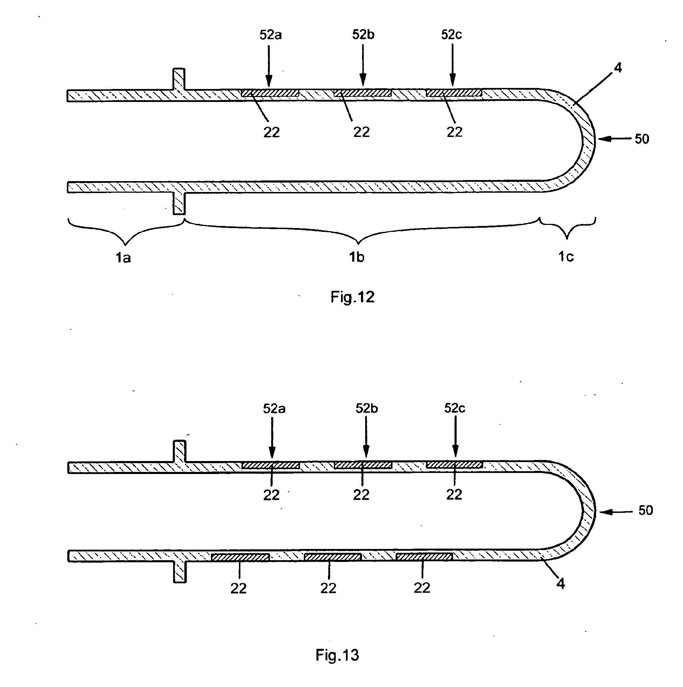

Fig. 12 is a schematic cross-section diagram of a preform as shown on Fig. 6.

Fig. 13 is a schematic cross-section diagram of a preform as shown on Fig. 11.

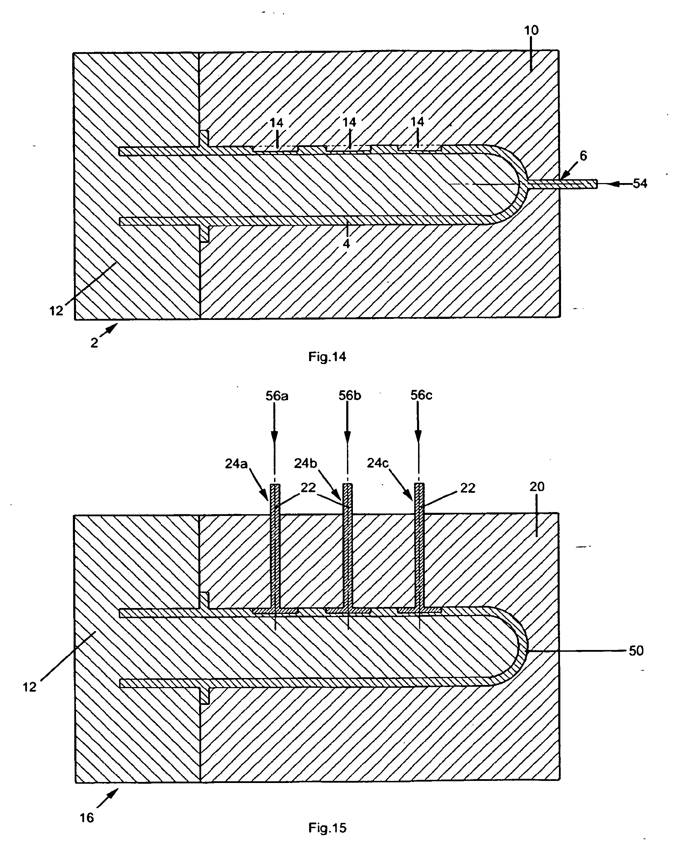

Fig. 14 is a schematic cross-section of a first preform mold useful for making a preform as shown on Figs. 6 and 12 with the first material completely injected in the first mold cavity. The empty volumes (14), which are three in this instance, are left empty after the injection of the first material. The first center (54) axis of the first nozzle (6) is in this instance coaxial with the central axis of the inner core rod (12), although this is not always necessary in the present invention.

Fig. 15 is a schematic cross-section of a first preform mold useful for making a preform as shown on Figs. 6 and 12 with the second material being completely injected in the second mold cavity. According to the present invention, the second center axis (56a, 56b, 56c) of each second injection nozzle (24a, 24b, 24c) are not coaxial with the first center axis (54) of the first injection nozzle.

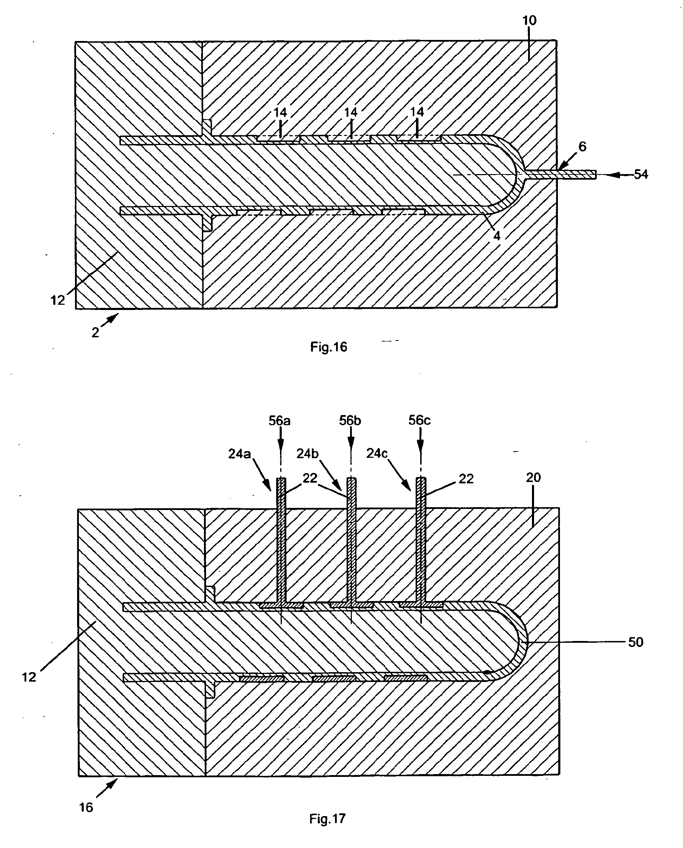

Fig. 16 is a schematic cross-section of a first preform mold useful for making a preform as shown on Figs. 11 and 13 with the first material completely injected in the first mold cavity.

Fig. 17 is a schematic cross-section of a first preform mold useful for making a preform as shown on Figs. 11 and 13 with the second material being completely injected in the second mold cavity. The first center axis (54) of the first injection nozzle (6) is not coaxial with the center axis of any of the second center axis (56a, 56b, 56c) of the second injection nozzles (24a, 24b, 24c).

The processes according to the invention are adapted to produce preforms and bottles made of two materials or more, wherein said materials have a precise and reproducible distribution in the bottle. Starting with the design of the desired bottle, the required preform and blow-mold can be designed using computer simulations, e.g. with Finite Element Analysis (FEA) tools. The bottles shown on Fig. 6 - 11 illustrate the type of results that may be obtained by blowing the preforms shown on the right hand side.

The injection point of the first material (50) and the injection point of the second material (52) are situated in different regions of the preform. Having different injection points for both materials allows more sophisticated repartition of materials of the preforms, for example it is this possible to obtain inclusion of the second material in the lateral wall of the preform, as illustrated in Fig. 2, which was not disclosed in the prior art. Preferably, the injection point of the first material (50) and the injection point of the second material (52) are both at the surface of the completed preform. Preferably the injection point of the first material (50) and the injection point of the second material (52) are at least 5mm, preferably 10mm apart from one another. Figs. 12 and 13 illustrate preforms wherein the injection point of the first material (50) is in the bottom region of the completed preform and the injection point of the second material (52a, 52b, 52c) are in the lateral wall of the completed preform.

The first and second materials may or may not be distributed in superposed horizontal layers.

As discussed above, the second material may or may not extend through the whole thickness of the wall but it is preferred that it only fills a recess in the lateral wall region of the preform where it does not extend through the whole thickness of the wall.

In addition to their decorative functions, the composite preforms and bottles may even have additional functions: for example, if the first material (4) is opaque while the second material (22) is transparent, the user may be able to look through the second material to see how much of the content is left in the bottle without opening it.

Other special effects may also be achieved. For example, the first or second material may contain thermochromic colorants such that the parts of the bottle or perform molded with said thermochromic colorants change color when exposed to changes in temperature. These color changes may be reversible or irreversible depending on the colorant used.

The bottles according to the invention may also be useful as anti-counterfeiting measures against rogue traders. Counterfeiting of high value goods such as cosmetics is a growing problem and counterfeiters would find it more difficult to copy a bottle with two built-in materials of different colors. If it is preferred that the bottle has only one overall color, another possibility is to use a first and a second materials having the same color in normal conditions, but add a UV reactive agent in one of the material. The UV reactive agent glows when illuminated by a proper UV lamp, which could be a hand-held detector, similarly to what is used for detecting counterfeit bank notes. This would ease counterfeit controls in places such as customs or marketplaces.

## Claims

1. A process for manufacturing a preform (26) comprising a bottom region (1c) and a lateral wall region (1b), suitable for blow-molding into a bottle and made of at least a first material (4) and a second material (22) different from the first material, said process comprising the successive steps of:
i) forming an incomplete preform (15) by injection-molding of a first material (4) into a preform cavity (8) through a first injection nozzle having a first center axis (54), said preform cavity (8) being formed by the space between an inner core rod (12) and a preform mold (10), wherein said preform cavity (8) is configured to leave at least one empty volume (14) in the incomplete preform (15) after the first material (4) has been totally injected in said preform cavity (8), and
ii) injecting the second material (22) into the empty volume (14) through a second injection nozzle (24) having a second center axis (56),
wherein the first center axis and the second center axis are not coaxial; and **characterized in that** the injection point of the first material is in the bottom region of the completed prefrom and the injection point of the second material is in the lateral wall of the completed prefrom, and **in that** the bottom region is entirely made of the first material.

2. A preform (26) made of at least a first material and a second material (22) different from the first material wherein said preform comprises a bottom region (1c) and a lateral wall region (1b), said bottom region being entirely made of the first material and the lateral wall region being made of the first material with the exception of at least one volume (14) which is filled by the second material (22); and, wherein said preform is obtainable by the process of claim 1.

3. A preform according to claim 2 wherein the injection point of the first material (50) and the injection point of the second material (52) are both at the surface of the completed preform.

4. A preform according to claim 2 or 3 wherein the injection point of the first material and the injection point of the second material are at least 5mm, preferably 10mm apart from one another.

5. A preform (26) according to claim 5 wherein said volume is a recess on the external surface of the preform that does not extend through the whole thickness of the lateral wall of the preform.

6. A preform according to claim 6 wherein the recess filled by the second material forms at least one ring at the external surface of the preform.

7. A preform according to claim 6 wherein the recess forms a shape at the surface of the preform which is not a ring.

8. A process for obtaining a bottle made of a first material and a second material different from the first material, said process comprising the step of blow-molding a preform according to any of claims 2 to 8.

9. A bottle made of at least a first material and a second material different from said first material, wherein said bottle is obtainable by blow-molding a preform according to any of claims 2 to 8.

## Patentansprüche

1. Verfahren zum Herstellen einer Vorform (26), die einen unteren Bereich (1c) und einen Seitenwandbereich (16) umfasst, zum Blasformen zu einer Flasche geeignet ist u aus mindestens einem ersten Material (4) und einem zweiten Material (22), das sich von dem ersten Material unterscheidet, hergestellt ist, wobei das Verfahren die folgenden aufeinander folgenden Schritte umfasst:
i) Bilden einer unvollständigen Vorform (15) durch Spritzgießen eines ersten Materials (4) in einen Vorform-Hohlraum (8) durch eine erste Einspritzdüse mit einer ersten Mittelachse (54), wobei der Vorform-Hohlraum (8) durch einen Raum zwischen einem Innenkemstab (12) und einer Vorform-Gießform (10) gebildet wird, wobei der Vorform-Hohlraum (8) so konfiguriert ist, dass er mindestens ein leeres Volumen (14) in der unvollständigen Vorform (15) belässt, nachdem das erste Material (4) vollständig in den Vorform-Hohlraum (8) eingespritzt wurde, und
ii) Einspritzen des zweiten Materials (22) in das leere Volumen (14) durch eine zweite Einspritzdüse (24) mit einer zweiten Mittelachse (56),
wobei die erste Mittelachse und die zweite Mittelachse nicht koaxial sind; und
**dadurch gekennzeichnet, dass** der Anspritzpunkt des ersten Materials im unteren Bereich der fertigen Vorform ist und der Anspritzpunkt des zweiten Materials in der Seitenwand der fertigen Vorfom ist, und **dadurch**, dass der untere Bereich vollständig aus dem ersten Material hergestellt ist.

2. Vorform (26), hergestellt aus mindestens einem ersten Material und einem zweiten Material (22), das sich von dem ersten Material unterscheidet, wobei die Vorform einen unteren Bereich (1c) und einen Seitenwandbereich (1b) umfasst, wobei der untere Bereich vollständig aus dem ersten Material hergestellt ist und der Seitenwandbereich aus dem ersten Material hergestellt ist, mit Ausnahme von mindestens einem Volumen (14), das von dem zweiten Material (22) gefüllt wird; und wobei die Vorform durch das Verfahren nach Anspruch 1 herstellbar ist.

3. Vorform nach Anspruch 2, wobei der Anspritzpunkt des ersten Materials (50) und der Anspritzpunkt des zweiten Materials (52) beide auf der Oberfläche der fertigen Vorform liegen.

4. Vorform nach Anspruch 2 oder 3, wobei der Anspritzpunkt des ersten Materials und der Anspritzpunkt des zweiten Materials mindestens 5 mm, vorzugsweise 10 mm voneinander entfernt sind.

5. Vorform (26) nach Anspruch 5, wobei das Volumen eine Vertiefung in der Außenoberfläche der Vorform ist, die sich nicht durch die ganze Dicke der Seitenwand der Vorform erstreckt.

6. Vorform nach Anspruch 6, wobei die Vertiefung, die von dem zweiten Material gefüllt wird, mindestens einen Ring an der Außenoberfläche der Vorform bildet.

7. Vorform nach Anspruch 6, wobei die Vertiefung eine Form, die kein Ring ist, an der Oberfläche der Vorform bildet.

8. Verfahren zum Herstellen einer Flasche, die aus einem ersten Material und einem zweiten Material, das sich von dem ersten Material unterscheidet, hergestellt ist, wobei das Verfahren den Schritt des Blasformens einer Vorform nach einem der Ansprüche 2 bis 8 umfasst.

9. Flasche, die aus einem ersten Material und einem zweiten Material, das sich von dem ersten Material unterscheidet, hergestellt ist, wobei die Flasche durch Blasformen einer Vorform nach einem der Ansprüche 2 bis 8 herstellbar ist.

## Revendications

1. Procédé pour la fabrication d'une préforme (26) comprenant une région de fond (1c) et une région de paroi latérale (1b), appropriée pour moulage par soufflage en une bouteille et constituée d'au moins un premier matériau (4) et un deuxième matériau (22) différent du premier matériau, ledit procédé comprenant les étapes successives consistant à :
i) former une préforme incomplète (15) par moulage par injection d'un premier matériau (4) dans une cavité de préforme (8) à travers une première buse d'injection ayant un premier axe central (54), ladite cavité de préforme (8) étant formée par l'espace entre un mandrin d'âme interne (12) et un moule à préforme (10), dans lequel ladite cavité de préforme (8) est configurée pour laisser au moins un volume vide (14) dans la préforme incomplète (15) après que le premier matériau (4) a été totalement injecté dans ladite cavité de préforme (8), et
ii) injecter le deuxième matériau (22) dans le volume vide (14) à travers une deuxième buse d'injection (24) ayant un deuxième axe central (56),
dans lequel le premier axe central et le deuxième axe central ne sont pas coaxiaux ; et **caractérisé en ce que** le point d'injection du premier matériau est dans la région de fond de la préforme terminée et le point d'injection du deuxième matériau est dans la paroi latérale de la préforme terminée, et **en ce que** la région de fond est entièrement constituée du premier matériau.

2. Préforme (26) constituée d'au moins un premier matériau et un deuxième matériau (22) différent du premier matériau où ladite préforme comprend une région de fond (1c) et une région de paroi latérale (1b), ladite région de fond étant entièrement constituée du premier matériau et la région de paroi latérale étant constituée du premier matériau à l'exception d'au moins un volume (14) qui est rempli par le deuxième matériau (22) ; et, où ladite préforme peut être obtenue par le procédé selon la revendication 1.

3. Préforme selon la revendication 2, dans laquelle le point d'injection du premier matériau (50) et le point d'injection du deuxième matériau (52) sont l'un et l'autre à la surface de la préforme terminée.

4. Préforme selon la revendication 2 ou 3, dans laquelle le point d'injection du premier matériau et le point d'injection du deuxième matériau sont espacés d'au moins 5 mm, de préférence 10 mm l'un de l'autre.

5. Préforme (26) selon la revendication 5, dans laquelle ledit volume est un évidement sur la surface externe de la préforme qui ne s'étend pas à travers l'épaisseur entière de la paroi latérale de la préforme.

6. Préforme selon la revendication 6, dans laquelle l'évidement rempli par le deuxième matériau forme au moins un anneau à la surface externe de la préforme.

7. Préforme selon la revendication 6, dans laquelle l'évidement forme une forme à la surface de la préforme qui n'est pas un anneau.

8. Procédé pour obtenir une bouteille constituée d'un premier matériau et d'un deuxième matériau différent du premier matériau, ledit procédé comprenant l'étape consistant à mouler par soufflage une préforme selon l'une quelconque des revendications 2 à 8.

9. Bouteille constituée d'au moins un premier matériau et un deuxième matériau différent dudit premier matériau, où ladite bouteille peut être obtenue par moulage par soufflage d'une préforme selon l'une quelconque des revendications 2 à 8.
